# EUROPEAN PATENT APPLICATION

(11) **EP 2 222 034 A1**
(43) Date of publication of application: **25.08.2010**
(21) Application number: 09305156.3
(22) Date of filing: 18.02.2009
(51) Int. Cl.: H04L 12/437

(54) **Protection of traffic flows in a radio communication network**

(71) Applicant: Alcatel Lucent, 75008 Paris (FR)
(72) Inventor: De Blasio, Giuseppe, 00135, ROMA (IT); Barzaghi, Giorgio, 20056, GREZZAGO (IT)
(74) Representative: Colombo, Stefano Paolo

(57) **Abstract**

It is disclosed a method for protecting a traffic flow transmitted in a radio communication network having a topology of a ring and comprising a plurality of network elements. The traffic flow has a flow portion being transmitted through a working path along a first direction of the ring. In case of presence of a failure or degradation on the working path, the method comprises: a) detecting the failure or degradation at a first network element adjacent to the failure or degradation and located upstream the failure or degradation along the working path; and b) rerouting, at the first network element, the flow portion from the working path to a protection path along a second direction of the ring opposite to the first direction.

## Description

### Technical Field

The present invention relates to the field of the radio communication networks. In particular, the present invention relates to the protection of traffic flows in a radio communication network having a ring topology.

### Background Art

As it is well known, a radio communication network comprises a plurality of network elements provided with respective radio equipment for transmitting and receiving traffic flows related to particular services. A traffic flow related to a particular service is generally carried over one radio channel. If the size of the radio channel allows, traffic flows related to different services may be carried over the same radio channel.

An example of traffic flow is a Time Division Multiplexing (TMD) traffic flow, which is transported through the radio communication network by using, for example, frames of a Plesiochronous Digital Hierarchy (PDH) or a Synchronous Digital Hierarchy (SDH).

Alternatively, a traffic flow can be divided into a plurality of packets, that are transmitted through the radio communication network. Each packet typically comprises a data portion (payload) and a header including additional information, such as for example information on source and destination, flags to designate the start and the end of the packet, information on the integrity of the payload, priority information, information on the type of payload, and the like. The packets originating from a single traffic flow may be transmitted through one or more radio channels. Therefore, dividing the traffic flow in packets allows to make the transmission of a service independent from a specific radio channel.

The plurality of network elements of the radio communication network may be organized according to different topologies, such as for instance star and tree topologies.

A star topology is an architecture in which the endpoints of the radio communication network are connected to a common central hub, or switch, by dedicated links. Besides, a tree topology is an architecture comprising branches with multiple network elements.

Wired communication networks are also known, comprising a plurality of network elements connected by means of wires, e.g. optical fibers. A typical topology of a wired communication network, in particular an optical fiber communication network, is the ring topology, in which the network elements are jointed to one another by connection fibers thereby forming ring-shaped transmission paths.

In current communication networks (both radio and wired), it is very important managing failures or degradations possibly occurring in the communication networks without impairing the functionality of the services. Therefore, the communication networks are typically provided with protection mechanisms configured for protecting the networks themselves against possible failures or degradations.

Hereinafter, the term "failure" will designate an event inducing interruption of transmission of a radio channel. On the other hand, the term "degradation" will designate an event inducing the performance of a radio channel to decrease below a threshold indicative of the minimum acceptable performance.

For instance, with reference to a ring-shaped optical fiber communication network, a protection mechanism is known, providing two traffic flow paths, one running in the clockwise direction and the other running in the counterclockwise direction. One of these paths, the so-called "working path", is used as working transport entity and the other one, the so-called "protection path", is used as protection transport entity. If the working path transporting a traffic flow fails or becomes degraded, it is possible to protect the traffic flow transported thereon by carrying out switching operations between the working path and the protection path.

In SDH/SONET networks, for example, a shared protection mechanism, the so-called MS-SPRING (Multiplex Section-Shared Protected Ring) is implemented for automatic data traffic restoration in ring topologies.

The MS-SPRING protection mechanism allows automatic traffic restoration in case of degradations or failures in connection fibers. In other words, the MS-SPRING protection mechanism performs the automatic restoration of traffic flows through a synchronized re-routing of said traffic flows, which is carried out at each network element of the ring.

More particularly, protection in a MS-SPRING is implemented according to a "Bridge and Switch" technique, that substantially consists in re-routing the traffic flow from the working path to the protection path, through a proper modification of the internal connections of the network elements.

### Summary of the Invention

The inventors have perceived that it would be advantageous to provide a radio communication network having a ring topology and equipped with a protection mechanism exploiting such a ring topology.

However, the inventors have noticed that the protection mechanism above described with reference to a wired ring communication network (i.e. the MS-SPRING) has some drawbacks.

Indeed, implementation of the MS-SPRING requires that each network element is provided with an APS controller, in order to be able to detect any failure or degradation, send and receive information to and from the other network elements, and carry out failure restoration actions. When a failure or degradation occurs, all the network elements send and receive information about the failure or degradation, e.g. type of failure or degradation and location thereof, and about the action, namely bridging or switching, to be performed in order to restore the traffic flow affected by the detected failure or degradation.

This disadvantageously causes a waste of resources of the communication network, both in terms of computation resources at the network elements that are required for generating and processing the information about the failure or degradation, and in terms of bandwidth which is required for transmitting such information.

Further, this disadvantageously makes the restoring operation a complex mechanism, since a very complex synchronization and coordination of the various network elements is required for correctly carrying out the restoration.

Therefore, the inventors have addressed the problem of providing a solution for protecting traffic flows in a radio communication network having a ring topology, which overcomes the aforesaid drawbacks.

In particular, the inventors have addressed the problem of providing a method for protecting traffic flows in a radio communication network having a ring topology, which allows exploiting the ring topology for performing protection of traffic flows, meanwhile avoiding a resource-consuming and complex mechanism of information exchange amongst the network elements.

According to a first aspect, the present invention provides a method for protecting a traffic flow transmitted in a radio communication network having a topology of a ring and comprising a plurality of network elements, the traffic flow having a flow portion being transmitted through a working path along a first direction of the ring, wherein, in case of presence of a failure or degradation on the working path, the method comprises:
a) detecting the failure or degradation at a first network element of the plurality of network elements, the first network element being adjacent to the failure or degradation and located upstream the failure or degradation along the working path; and
b) rerouting, at the first network element, the flow portion from the working path to a protection path along a second direction of the ring opposite to the first direction.

Preferably, the method further comprises, at a network element located upstream the first network element along the working path, continuing routing the flow portion along the working path, until the first network element.

Preferably, step b) comprises, in a switching matrix included in the first network element:
- switching the flow portion from an input of the switching matrix from which the flow portion is received from the working path to an output of the switching matrix through which the flow portion is transmitted along the working path in absence of the failure or degradation; and
- at the output, performing a loopback on the flow portion by switching the flow portion to a further output of the switching matrix through which the flow portion is transmitted along the protection path.

Profitably, the method further comprises, at a network element located upstream the first network element along the working path, receiving the flow portion after it has undergone the loopback, and passing through the flow portion along the protection path, until a further network element.

Preferably, the method further comprises, if the further network element is other than an output network element through which the flow portion has to exit the radio communication network, rerouting the flow portion from the protection path to the working path, until the output network element.

Preferably, the method further comprises using the protection path for transmitting a further traffic flow in the radio communication network, before the first network element performs step a).

Preferably, the method further comprises, before step a), determining at a second network element adjacent to the failure or degradation and located downstream the failure or degradation along the working path, that the failure or degradation is unidirectional, and forcing the failure or degradation to become bidirectional, thus allowing the first network element to detect the failure or degradation.

According to a second aspect, the present invention provides a network element for a radio communication network having a topology of a ring, the radio communication network being suitable for transmitting a flow portion of a traffic flow through a working path along a first direction of the ring, wherein the network element is configured for:
a) detecting a failure or degradation, the first network element being adjacent to the failure or degradation and located upstream the failure or degradation along the working path; and
b) rerouting the flow portion from the working path to a protection path suitable for transporting the flow portion along a second direction of the ring opposite to the first direction.

According to a third aspect, the present invention provides a radio communication network having a topology of a ring and comprising a plurality of network elements, the radio communication network being suitable for transmitting a flow portion of a traffic flow through a working path along a first direction of the ring, wherein the plurality of network elements comprise a first network element as set forth above.

According to a fourth aspect, the present invention provides a computer program product comprising computer-executable instructions for performing the method as set forth above, when the program is run on a computer.

### Brief description of the drawings

Embodiments of the invention will be better understood by reading the following detailed description, given by way of example and not of limitation, to be read by referring to the accompanying drawings, wherein:
- Figure 1 shows a ring-shaped radio communication network provided with a protection mechanism of the traffic flows according to an embodiment of the present invention;
- Figures 2a and 2b schematically show a first bidirectional traffic flow transmitted through the radio communication network of Figure 1 in normal operative condition and when a failure occurs at a network element of the radio communication network, respectively;
- Figures 3a and 3b schematically show a second bidirectional traffic flow transmitted through the radio communication network of Figure 1 in normal operative condition and when a failure occurs at a network element of the radio communication network, respectively; and
- Figures 4a and 4b schematically show a third bidirectional traffic flow transmitted through the radio communication network of Figure 1 in normal operative condition and when a failure occurs at a network element of the radio communication network, respectively.

### Detailed description of preferred embodiments of the invention

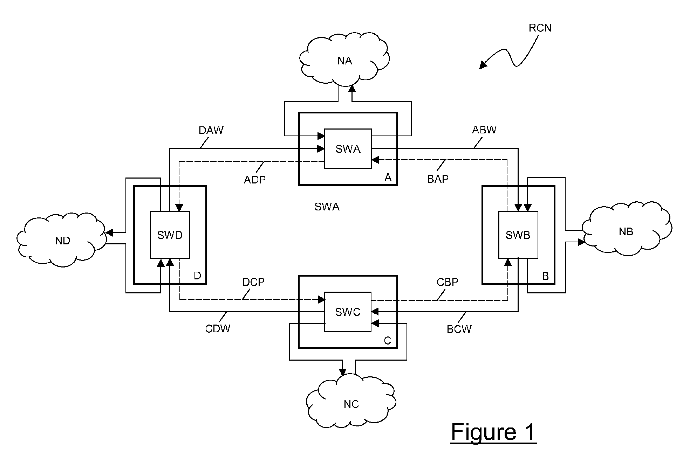

Figure 1 shows a radio communication network RCN having a ring topology and provided with a protection mechanism of the traffic flows according to embodiments of the present invention.

For simplicity, it is assumed that the radio communication network RCN comprises only four network elements A, B, C, D connected one to another to form a ring. Obviously, this is merely exemplary, since the radio communication network RCN can comprise any suitable number of network elements.

Each network element of the radio communication network RCN may be connected to a respective further communication network cooperating with the radio communication network RCN. Such further communication networks may be either wired or radio communication networks. By way of example, in the radio communication network RCN of Figure 1, each network element A, B, C, D is connected to a further radio communication network NA, NB, NC, ND, respectively.

Each network element A, B, C, D of the radio communication network RCN is provided with a respective switch matrix SWA, SWB, SWC, SWD having a plurality of inputs and outputs. For each input of its respective switch matrix SWA, SWB, SWC, SWD, each network element A, B, C, D comprises a respective reception radio interface (not shown in Figure 1) suitable for receiving one or more traffic flows from another network element of the radio communication network RCN or from the respective further radio communication network NA, NB, NC, ND. Similarly, for each output of its respective switch matrix SWA, SWB, SWC, SWD, each network element A, B, C, D comprises a respective transmission radio interface (not shown in Figure 1) suitable for transmitting one or more traffic flows to another network element of the radio communication network RCN or to the respective further radio communication network NA, NB, NC, ND.

Preferably, each of the switch matrixes SWA, SWB, SWC, SWD is suitable for receiving one or more traffic flows at its inputs from the respective reception radio interfaces and for routing them to suitable outputs, so that they can be transmitted to another network element of the radio communication network RCN or to the respective further radio communication network NA, NB, NC, ND by means of the respective transmission radio interfaces. Preferably, the switch matrixes SWA, SWB, SWC, SWD are packet-switched matrixes, such as for instance Ethernet switches.

The network elements A, B, C, D may exchange traffic flows along respective working paths, each having associated a respective protection path.

The working paths act as working transport entities when the radio communication network RCN is free from failures or degradations. The working paths are formed by one or more of a working radio channel ABW connecting the network element A to the network element B, a working radio channel BCW connecting the network element B to the network element C, a working radio channel CDW connecting the network element C to the network element D, and a working radio channel DAW connecting the network element D to the network element A. In other words, in the example of Figure 1, the working paths transport traffic flows in a clockwise direction along the ring formed by the network elements A, B, C and D.

On the other hand, the protection paths act as protection transport entities when one or more of the working paths is affected by a failure or degradation. The protection paths are formed by one or more of a protection radio channel ADP connecting the network element A to the network element D, a protection radio channel DCP connecting the network element D to the network element C, a protection radio channel CBP connecting the network element C to the network element B, and a protection radio channel BAP connecting the network element B to the network element A. In other words, in the example of Figure 1, the protection paths transport traffic flows in a counterclockwise direction along the ring formed by the network elements A, B, C and D.

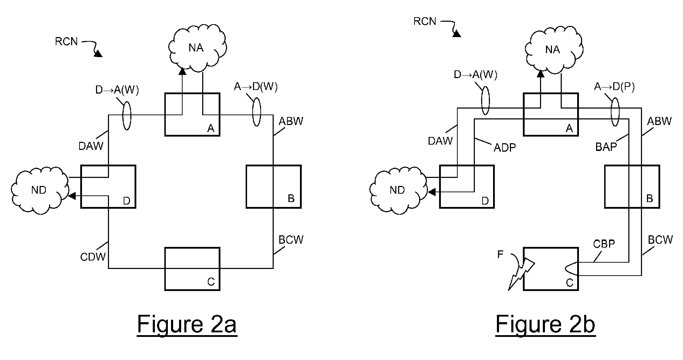

With reference to Figures 2a to 4b, the protection mechanism of traffic flows according to embodiments of the present invention will be described in detail, by considering an exemplary case in which the radio communication network RCN is used for transmitting three bidirectional traffic flows, respectively:
- A↔D between the network elements A and D,
- A↔C between the network elements A and C, and
- A↔B between the network elements A and B.

This is merely exemplary, since any number of bidirectional traffic flows, either protected or unprotected, can be transmitted through the radio communication network RCN, among each pair of network elements (e.g. the network elements B and C, B and D, or C and D).

Besides, it is preferably assumed that the three traffic flows A↔D, A↔C and A↔B are packet traffic flows.

It is also preferably assumed that the three bidirectional traffic flows A↔D, A↔C and A↔B are protected traffic flows, i.e. when a failure or degradation affects the working path transporting any of them, the protection mechanism provides for activation of a protection path allowing restoration of the traffic flow.

Figures 2a and 2b show in detail the first bidirectional traffic flow A↔D transported through the radio communication network RCN previously described with reference to Figure 1, respectively in normal operative condition (Figure 2a), and when a failure or degradation occurs in the radio communication network RCN (Figure 2b).

The first bidirectional traffic flow A↔D comprises a flow portion A→D transported from the network element A to the network element D, and a flow portion D→A transported from the network element D to the network element A.

With reference first to Figure 2a, in normal operative conditions, the flow portion A→D (whose packets may be either generated at the network element A or received at the network element A from the further radio communication network NA) is transmitted from the network element A to the network element D (where packets may be either terminated or forwarded to the further radio communication network ND) along a working path A→D(W) including the working radio channels ABW, BCW and CDW.

In particular, the network element A routes the packets of the flow portion A→D by means of its switch matrix SWA so as to transmit them to the network element B by means of the working radio channel ABW. Upon reception of the packets from the network element A, the network element B routes them by means of its switch matrix SWB so as to transmit them to the network element C by means of the working radio channel BCW. Upon reception of the packets from the network element B, the network element C routes them by means of its switch matrix SWC so as to transmit them to the network element D by means of the working radio channel CDW.

Similarly, the portion D→A (whose packets may be either generated at the network element D or received at the network element D from the sub-network ND) is transmitted from the network element D to the network element A (where packets may be either terminated or forwarded to the further radio communication network NA) along a working path D→A(W) including the working radio channel DAW.

In particular, the network element D routes the packets of the flow portion D→A by means of its switch matrix SWD so as to transmit them to the network element A by means of the radio channel DAW.

With reference now to Figure 2b, it is assumed that a failure or degradation occurs in the radio communication network RCN on the working path A→D(W), e.g. between the network elements C and D. Such a failure or degradation may affect only transmission from C to D or only transmission from D to C (unidirectional), or it may affect both transmission from C to D and transmission from D to C (bidirectional). By way or mere example, it is assumed that a unidirectional failure F occurs, e.g. due to a failure at the transmission radio interface of the network element C through which it transmits the flow portion A→D to the network element D by means of the working radio channel CDW.

In this case, both the network elements adjacent to the failure F, in the example the network elements C and D, detect the presence of such a failure F. Specifically, the network element C due to the failure F stops transmitting the packets of the flow portion A→D to the network element D, that accordingly detects a loss of signal at its reception radio interface and forces the unidirectional failure F to become bidirectional, so that also the network element C becomes aware of the failure F. For instance, if transmission of traffic flows in the radio communication network RCN uses ATM (Asynchronous Transfer Mode), the network element C forces the unidirectional failure F to become bidirectional using the known RDI (Remote Defect Indication) technique. If the failure F is bidirectional, both network elements C and D become independently aware of the failure substantially at the same time.

When the network elements adjacent to the failure F (i.e. the network elements C and D) become aware of the failure F, they take actions for rerouting the flow portion A→D from the working path A→D(W) to a protection path A→D(P).

In particular, when the packets of the flow portion A→D are received at the network element C, which is the adjacent network element upstream to the failure F according to the direction of the working path, the switch matrix SWC reroutes the packets along the counterclockwise direction followed by the protection paths, i.e. it reroutes the packets to the network element B through the protection radio channel CBP.

Preferably, such rerouting operation is performed in two steps. In a first step, the switch matrix SWC routes the packets from the input through which packets are received from the working radio channel BCW to the output through which packets were transmitted (in absence of failures or degradations) to the working radio channel CDW. In a second step, the packets routed to the above output are queued at the input from which packets would be received from the protection radio channel DCP, and then are routed to the output through which packets are transmitted to the protection radio channel CBP. In the following description, this second step is referred to as "loopback".

When the packets of the flow portion A→D are received at the network element B, the switch matrix SWB preferably routes them so that they are transmitted to the network element A through the protection radio channel BAP. Upon reception of such packets, the switch matrix SWA of the network element A preferably routes them so that they are transmitted to the network element D through the protection radio channel ADP.

When the network element D receives the packets of the flow portion A→D from the network element A, if the network element D is the destination node for such flow portion A→D, it preferably terminates the received packets. Otherwise, the switch matrix SWD preferably routes them so that they are transmitted to the further radio communication network ND.

Therefore, in the event of the failure F, the flow portion A→D of the first bidirectional traffic flow travels on a protection path A→D(P) overlapping with the working path A→D(W) until entering the network element C (that is, the working path A→D(W), in these conditions, operates as a protection path between the network elements A and C). At the network element C, the protection path A→D(P) diverts from the working path A→D(W) due to the rerouting operation, following which the flow portion A→D is transported on the protection radio channels CBP, BAP and ADP until the network element D.

The other portion D→A of the first bidirectional traffic flow A↔D is not affected by the failure F, thus it continues being transported on the working path D→A(W).

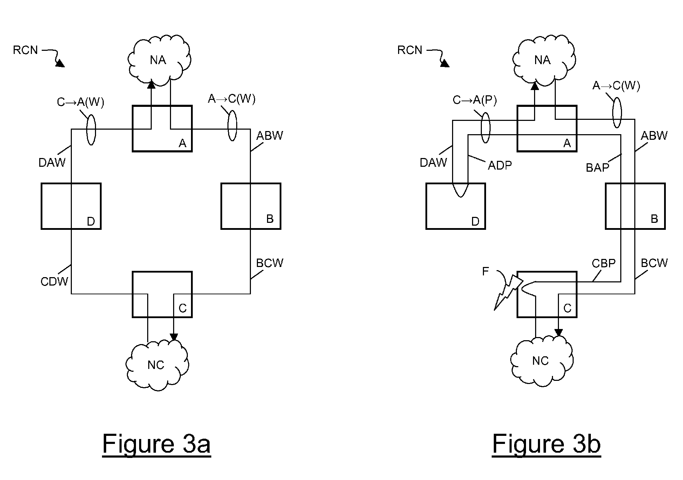

Figures 3a and 3b show in detail the second bidirectional traffic flow A↔C transported through the radio communication network RCN of Figure 1, respectively in normal operative condition (Figure 3a) and when a failure or degradation occurs in the radio communication network RCN (Figure 3b).

The second bidirectional traffic flow A↔C comprises a flow portion A→C transported from the network element A to the network element C, and a flow portion C→A transported from the network element C to the network element A.

With reference first to Figure 3a, in normal operative conditions, the flow portion A→C (whose packets may be either generated at the network element A or received at the network element A from the further radio communication network NA) is transmitted from the network element A to the network element C (where packets may be either terminated or forwarded to the further radio communication network NC) along a working path A→C(W) including the working radio channels ABW and BCW.

In particular, the network element A routes the packets of the flow portion A→C by means of its switch matrix SWA so as to transmit them to the network element B by means of the working radio channel ABW. Upon reception of the packets from the network element A, the network element B routes them by means of its switch matrix SWB so as to transmit them to the network element C by means of the working radio channel BCW.

Similarly, the portion C→A (whose packets may be either generated at the network element C or received at the network element C from the sub-network NC) is transmitted from the network element C to the network element A (where packets may be either terminated or forwarded to the further radio communication network NA) along a working path C→A(W) including the working radio channels CDW and DAW.

In particular, the network element C routes the packets of the flow portion C→A by means of its switch matrix SWC so as to transmit them to the network element D by means of the radio channel CDW. Upon reception of the packets from the network element C, the network element D routes them by means of its switch matrix SWD so as to transmit them to the network element A by means of the working radio channel DAW.

With reference now to Figure 3b, it is again assumed that a failure or degradation occurs in the radio communication network RCN on the working path C→A(W) between the network elements C and D. For example, it is assumed that a failure F occurs at the transmission radio interface of the network element C through which it transmits the flow portion C→A to the network element D by means of the working radio channel CDW.

Also in this case, both the network elements C and D adjacent to the failure F detect the presence of such a failure F. Specifically, the network element C due to the failure F stops transmitting the packets of the flow portion C→A to the network element D, that accordingly detects a loss of signal at its receipt radio interface and forces the unidirectional failure F to become bidirectional, so that also the network element C becomes aware of the failure F.

When the network elements adjacent to the failure F (i.e. the network elements C and D) become aware of the failure F, they take actions for rerouting the flow portion C→A from the working path C→A(W) to a protection path C→A(P).

In particular, when the packets of the flow portion C→A are received at the network element C, which is the adjacent network element upstream to the failure F according to the direction of the working path, the switch matrix SWC reroutes the packets along the counterclockwise direction followed by the protection paths, i.e. it reroutes the packets to the network element B through the protection radio channel CBP.

Preferably, such rerouting operation is performed in two steps. In a first step, the switch matrix SWC routes the packets from the input through which packets are received, for example from the further radio communication network NC, to the output through which packets were transmitted (in absence of failures or degradations) to the working radio channel CDW. In a second step, the packets are subjected to a loop-back, i.e. the packets routed to the above output are queued at the input from which packets would be received from the protection radio channel DCP, and then are routed to the output through which packets are transmitted to the protection radio channel CBP.

When the packets of the flow portion C→A are received at the network element B, the switch matrix SWB preferably routes them so that they are transmitted to the network element A through the protection radio channel BAP. Upon reception of such packets, the switch matrix SWA of the network element A preferably routes them so that they are transmitted to the network element D through the protection radio channel ADP.

When the packets of the flow portion C→A are received at the network element D, which is the adjacent network element downstream to the failure F according to the direction of the working path, the switch matrix SWD reroutes the packets along the clockwise direction followed by the working paths, i.e. it reroutes the packets to the network element A through the working radio channel DAW.

Preferably, such further rerouting operation is performed in two steps. In a first step, the switch matrix SWD routes the packets from the input through which packets are received from the protection radio channel AD_{P} to the output through which packets would be transmitted to the protection radio channel DC_{P}. In a second step, the packets are subjected to a further loop-back, i.e. the packet routed to the above output are queued at the input from which packets were received from the working radio channel CDW before the failure F occurred, and then are routed to the output through which packets are transmitted to the working radio channel DAW.

When the network element A receives the packets of the flow portion C→A from the network element D, if the network element A is the destination node for such flow portion C→A, it preferably terminates the received packets. Otherwise, the switch matrix SWA preferably routes them so that they are transmitted to the further radio communication network NA.

Therefore, in the event of the failure F, the flow portion C→A of the second bidirectional traffic flow travels on a protection path C→A(P) initially diverting from the working path A→C(W) due to the rerouting operation performed at the network element C, following which the flow portion C→A is transported on the protection radio channels CBP, BAP and ADP until entering the network element D. At the network element D, the protection path C→A(P) overlaps with the working path C→A(W) (that is, the working path C→A(W), in these conditions, operates as a protection path between the network elements D and A) due to the further rerouting operation, following which the flow portion C→A is transported on the working radio channel DAW until the network element A.

The other portion A→C of the second bidirectional traffic flow A↔C is not affected by the failure F, thus it continues being transported on the working path A→C(W).

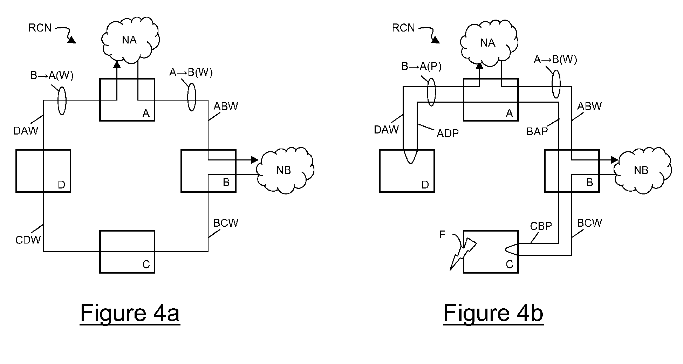

Figures 4a and 4b show in detail the third bidirectional traffic flow A↔B transported through the radio communication network RCN of Figure 1, respectively in normal operative condition (Figure 4a) and when a failure or degradation occurs in the radio communication network RCN (Figure 4b).

The third bidirectional traffic flow A↔B comprises a flow portion A→B transported from the network element A to the network element B, and a flow portion B→A transported from the network element B to the network element A.

With reference first to Figure 4a, in normal operative conditions, the flow portion A→B (whose packets may be either generated at the network element A or received at the network element A from the further radio communication network NA) is transmitted from the network element A to the network element B (where packets may be either terminated or forwarded to the further radio communication network NC) along a working path A→B(W) including the working radio channel ABW.

In particular, the network element A routes the packets of the flow portion A→B by means of its switch matrix SWA so as to transmit them to the network element B by means of the working radio channel ABW.

Similarly, the portion B→A (whose packets may be either generated at the network element B or received at the network element B from the sub-network NB) is transmitted from the network element B to the network element A (where packets may be either terminated or forwarded to the further radio communication network NA) along a working path B→A(W) including the working radio channels BCW, CDW and DAW.

In particular, the network element B routes the packets of the flow portion B→A by means of its switch matrix SWB so as to transmit them to the network element C by means of the radio channel BCW. Upon reception of the packets from the network element B, the network element C routes them by means of its switch matrix SWC so as to transmit them to the network element D by means of the working radio channel CDW. Upon reception of the packets from the network element C, the network element D routes them by means of its switch matrix SWD so as to transmit them to the network element A by means of the working radio channel DAW.

With reference now to Figure 4b, it is again assumed that a failure or degradation occurs in the radio communication network RCN on the working path B→A(W) between the network elements B and A. For example, it is assumed that a failure F occurs at the transmission radio interface of the network element C through which it transmits the flow portion B→A to the network element D by means of the working radio channel CDW.

Also in this case, both the network elements C and D adjacent to the failure F detect the presence of such a failure F, as previously described with reference to Figures 2b and 3b.

When the network elements adjacent to the failure F (i.e. the network elements C and D) become aware of the failure F, they take actions for rerouting the flow portion B→A from the working path B→A(W) to a protection path B→A(P).

In particular, when the packets of the flow portion B→A are received at the network element C, which is the adjacent network element upstream to the failure F according to the direction of the working path, the switch matrix SWC reroutes the packets along the counterclockwise direction followed by the protection paths, i.e. it reroutes the packets to the network element B through the protection radio channel CBP.

Preferably, such rerouting operation is performed in two steps. In a first step, the switch matrix SWC routes the packets from the input through which packets are received from the working radio channel BCW to the output through which packets were transmitted (in absence of failures or degradations) to the working radio channel CDW. In a second step, the packets are subjected to a loop-back, i.e. the packets routed to the above output are queued at the input from which packets would be received from the protection radio channel DCP, and then are routed to the output through which packets are transmitted to the protection radio channel CBP.

When the packets of the flow portion C→A are received at the network element B, the switch matrix SWB preferably routes them so that they are transmitted to the network element A through the protection radio channel BAP. Upon reception of such packets, the switch matrix SWA of the network element A preferably routes them so that they are transmitted to the network element D through the protection radio channel ADP.

When the packets of the flow portion C→A are received at the network element D, which is the adjacent network element downstream to the failure F according to the direction of the working path the switch matrix SWD reroutes the packets along the clockwise direction followed by the working paths, i.e. it reroutes the packets to the network element A through the working radio channel DAW.

Preferably, such further rerouting operation is performed in two steps. In a first step, the switch matrix SWD routes the packets from the input through which packets are received from the protection radio channel ADP to the output through which packets would be transmitted to the protection radio channel DCP. In a second step, the packets are subjected to a further loop-back, i.e. the packet routed to the above output are queued at the input from which packets were received from the working radio channel CDW before the failure F occurred, and then are routed to the output through which packets are transmitted to the working radio channel DAW.

When the network element A receives the packets of the flow portion B→A from the network element D, if the network element A is the destination node for such flow portion B→A, it preferably terminates the received packets. Otherwise, the switch matrix SWA preferably routes them so that they are transmitted to the further radio communication network NA.

Therefore, in the event of the failure F, the flow portion B→A of the third bidirectional traffic flow travels on a protection path B→A(P) overlapping with the working path B→A(W) (that is, the working path B→A(W), in these conditions, operates as a protection path between the network elements B and C) until entering the network element C. At the network element C, the protection path B→A(P) diverts from the working path B→A(W) due to the rerouting operation performed at the network element C, following which the flow portion B→A is transported on the protection radio channels CBP, BAP and ADP until entering the network element D. At the network element D, the protection path B→A(P) overlaps with the working path B→A(W) (that is, the working path B→A(W), in these conditions, operates as a protection path between the network elements D and A) due to the further rerouting operation, following which the flow portion B→A is transported on the working radio channel DAW until the network element A.

The other portion A→B of the third bidirectional traffic flow A↔B is not affected by the failure F, thus it continues being transported on the working path A→B(W).

From the above description it follows that, in the event of a failure F on the radio communication network RCN, the only network elements which have to operatively intervene to reroute the traffic flow between the working path and the protection path in order to restore it are those adjacent to the failure F itself.

This advantageously avoids, in the event of a failure or degradation, a resource-consuming and complex mechanism of information exchange amongst all the network elements forming the ring. Indeed, only the network elements adjacent to the failure have to become aware of the failure F and take actions for restoring the traffic flow transmitted on the radio communication network RCN.

In particular, upon detection of the failure F, such network elements change configuration of their switch matrixes in order to perform the above mentioned loopback operation. This advantageously allows to perform restoration of the traffic flows (or flow portions) whose working paths are affected by the failure, while the remaining network elements (in particular, the network elements through which the traffic flows enter or exit the ring) continue operating as before occurrence of the failure, without any need of changing configuration of their switch matrixes. In other words, the remaining network elements may ignore the failure F.

It can be noticed that, if one of the network elements adjacent to the failure F is an intermediate network element of the working path and the other one is the network element through which the flow portion exits the ring (see e.g. Figures 2a and 2b), a single loopback operation at the intermediate network element is sufficient for restoring traffic. Indeed, the flow portion is transmitted along the working path until the intermediate network element, thereby advantageously avoiding reconfiguration of the switch matrix of the network element through which the flow portion enters the ring, that is not adjacent to the failure F. Then, at the intermediate network element adjacent to the failure F, the loopback operation reroutes the flow portion on protection radio channels that transport it until the network element through which the flow portion exits the ring.

On the other hand, if one of the network elements adjacent to the failure F is an intermediate network element of the working path and the other one is the network element through which the flow portion enters the ring (see e.g. Figures 3a and 3b), two loopback operations are required for restoring traffic. Indeed, a first loopback operation at the network element through which the flow portion enters the ring reroutes the flow portion on protection radio channels that transport it until the intermediate network element. The second loopback operation at the intermediate network element reroutes the traffic portion on the working path, thereby advantageously avoiding reconfiguration of the switch matrix of the network element through which the flow portion exits the ring, that is not adjacent to the failure F.

On the other hand, if both the network elements adjacent to the failure F are intermediate network elements of the working path (see e.g. Figures 4a and 4b), two loopback operations are required for restoring traffic. Indeed, the flow portion is transmitted along the working path until the first intermediate network element, thereby advantageously avoiding reconfiguration of the switch matrix of the network element through which the flow portion enters the ring, that is not adjacent to the failure F. Then, at the first intermediate network element adjacent to the failure F, the first loopback operation reroutes the flow portion on protection radio channels that transport it until the second intermediate network element. At the second intermediate network element, the flow portion undergoes the second loopback operation rerouting it on the working path. This advantageously allows avoiding reconfiguration of the switch matrix of the network element through which the flow portion exits the ring, that is not adjacent to the failure F.

Therefore, advantageously, the protection method of the present invention avoids to provide the network elements of the radio communication network with APS controllers, thus simplifying the network element configuration.

Further advantageously, the protection method of the invention is a very simple mechanism, since a synchronization and coordination of the various network elements is not required for correctly carrying out the traffic flow restoration.

Preferably, one or more unprotected traffic flows, i.e. traffic flows associated to unprotected services, can also be transmitted on both the working path and the protection path.

When no failures or degradations are present in the radio communication network RCN, those unprotected traffic flows can exploit all the protection radio channels and any residual radio bandwidth of the working radio channels that is not used for transmitting the protected traffic flows. Preferably, the radio bandwidths of the protection and working radio channels are shared by the unprotected traffic flows by using any known mechanism of QoS (Quality of Service) implementation.

When a failure or degradation occurs in the radio communication network RCN, the radio bandwidth of the protection radio channels is used for activating one or more protection paths suitable for transmitting the protected traffic flows, as described above with reference to Figures 2b, 3b and 4b. However, if the overall radio bandwidth required for transmitting the protected traffic flows is less than the radio bandwidth allocated for activating the one or more protection paths, the unprotected traffic flows can be also be transmitted by using this residual radio bandwidth. Preferably, the residual radio bandwidth of the protection radio channels is shared by the unprotected traffic flows by any known mechanisms of QoS implementation.

This advantageously allows to exploit as much as possible the available radio bandwidth of the radio communication network RCN.

## Claims

1. A method for protecting a traffic flow (A↔D; A↔C; A↔B) transmitted in a radio communication network (RCN) having a topology of a ring and comprising a plurality of network elements (A, B, C, D), said traffic flow (A↔D; A↔C; A↔B) having a flow portion (A→D; C→A; B→A) being transmitted through a working path along a first direction of said ring, wherein, in case of presence of a failure or degradation (F) on said working path, the method comprises:
a) detecting said failure or degradation (F) at a first network element (C) of said plurality of network elements (A, B, C, D), said first network element (C) being adjacent to said failure or degradation (F) and located upstream said failure or degradation (F) along said working path; and
b) rerouting, at said first network element (C), the flow portion (A→D; C→A; B→A) from the working path to a protection path along a second direction of said ring opposite to said first direction.

2. The method according to claim 1, wherein it further comprises, at each network element located upstream said first network element (C) along said working path, continuing routing said flow portion (A→D; C→A; B→A) along said working path, until said first network element (C).

3. The method according to claim 1 or 2, wherein said step b) comprises, in a switching matrix (SWC) included in said first network element (C):
- switching said flow portion (A→D; C→A; B→A) from an input of said switching matrix (SWC) from which said flow portion (A→D; C→A; B→A) is received from said working path to an output of said switching matrix (SWC) through which said flow portion (A→D; C→A; B→A) is transmitted along said working path in absence of said failure or degradation (F); and
- at said output, performing a loopback on said flow portion (A→D; C→A; B→A) by switching said flow portion (A→D; C→A; B→A) to a further output of said switching matrix (SWC) through which said flow portion (A→D; C→A; B→A) is transmitted along said protection path.

4. The method according to claim 3, wherein it further comprises, at a network element located upstream said first network element (C) along said working path, receiving said flow portion (A→D; C→A; B→A) after it has undergone said loopback, and passing through said flow portion (A→D; C→A; B→A) along said protection path, until a further network element.

5. The method according to claim 4, wherein it further comprises, if said further network element is other than an output network element (A) through which said flow portion (A→D; C→A; B→A) has to exit said radio communication network (RCN), rerouting the flow portion (A→D; C→A; B→A) from said protection path to said working path, until said output network element (A).

6. The method according to any of the preceding claims, wherein it further comprises using said protection path for transmitting a further traffic flow in said radio communication network (RCN), before said first network element (C) performs said step a).

7. The method according to any of the preceding claims, wherein it further comprises, before said step a), determining at a second network element (D) adjacent to said failure or degradation (F) and located downstream said failure or degradation (F) along said working path, that said failure or degradation (F) is unidirectional, and forcing said failure or degradation (F) to become bidirectional, thus allowing said first network element (C) to detect said failure or degradation (F).

8. A network element (C) for a radio communication network (RCN) having a topology of a ring, said radio communication network (RCN) being suitable for transmitting a flow portion (A→D; C→A; B→A) of a traffic flow (A↔D; A↔C; A↔B) through a working path along a first direction of said ring, wherein said network element (C) is configured for:
a) detecting a failure or degradation (F), said first network element (C) being adjacent to said failure or degradation (F) and located upstream said failure or degradation (F) along said working path; and
b) rerouting the flow portion (A→D; C→A; B→A) from the working path to a protection path suitable for transporting said flow portion (A→D; C→A; B→A) along a second direction of said ring opposite to said first direction.

9. A radio communication network (RCN) having a topology of a ring and comprising a plurality of network elements (A, B, C, D), said radio communication network (RCN) being suitable for transmitting a flow portion (A→D; C→A; B→A) of a traffic flow (A↔D; A↔C; A↔B) through a working path along a first direction of said ring, wherein said plurality of network elements (A, B, C, D) comprise a first network element (C) according to claim 8.

10. The radio communication network (RCN) according to claim 9, wherein each network element located upstream said first network element (C) along said working path is configured for continuing routing said flow portion (A→D; C→A; B→A) along said working path, until said first network element (C).

11. The radio communication network (RCN) according to claim 9 or 10, wherein said first network element (C) comprises a switching matrix (SWC) configured for performing said rerouting by:
- switching said flow portion (A→D; C→A; B→A) from an input of said switching matrix (SWC) from which said flow portion (A→D; C→A; B→A) is received from said working path to an output of said switching matrix (SWC) through which said flow portion (A→D; C→A; B→A) is transmitted along said working path in absence of said failure or degradation (F); and
- at said output, performing a loopback on said flow portion (A→D; C→A; B→A) by switching said flow portion (A→D; C→A; B→A) to a further output of said switching matrix (SWC) through which said flow portion (A→D; C→A; B→A) is transmitted along said protection path.

12. The radio communication network (RCN) according to claim 11, wherein a network element located upstream said first network element (C) along said working path, is configured for receiving said flow portion (A→D; C→A; B→A) after it has undergone said loopback, and passing through said flow portion (A→D; C→A; B→A) along said protection path, until a further network element.

13. The radio communication network (RCN) according to claim 12 wherein, if said further network element is other than an output network element (A) through which said flow portion (A→D; C→A; B→A) has to exit said radio communication network (RCN), said third network element is configured for rerouting the flow portion (A→D; C→A; B→A) from said protection path to said working path, until said output network element (A).

14. The radio communication network (RCN) according to any of claims 9 to 13, wherein said plurality of network elements (A, B, C, D) is configured for using said protection path for transmitting a further traffic flow in said radio communication network (RCN), before said first network element (C) performs said detecting.

15. The radio communication network (RCN) according to any of claims 9 to 14, wherein said second network element (D) adjacent to said failure or degradation (F) and located downstream said failure or degradation (F) along said working path, is configured for determining that that said failure or degradation (F) is unidirectional, and forcing said failure or degradation (F) to become bidirectional, thus allowing said first network element (C) to detect said failure or degradation (F).

16. A computer program product comprising computer-executable instructions for performing the method of claim 1 when the program is run on a computer.

## Amended claims

### Amended claims in accordance with Rule 137(2) EPC.

**1.** A method for protecting a traffic flow (A↔D; A↔C; A↔B) transmitted in a radio communication network (RCN) having a topology of a ring and comprising a plurality of network elements (A, B, C, D), said traffic flow (A↔D; A↔C; A↔B) having a flow portion (A↔D; C↔A; B↔A) being transmitted through a working path along a first direction of said ring, wherein, in case of presence of a failure or degradation (F) on said working path, the method comprises:
a) detecting said failure or degradation (F) at a first network element (C) of said plurality of network elements (A, B, C, D), said first network element (C) being adjacent to said failure or degradation (F) and located upstream said failure or degradation (F) along said working path; and
b) rerouting, at said first network element (C), the flow portion (A↔D; C↔A; B↔A) from the working path to a protection path along a second direction of said ring opposite to said first direction,
said method being **characterized in that** it does not comprise any information about said failure or degradation (F) exchange amongst all of said plurality of network elements (A, B, C, D).

**2.** The method according to claim 1, wherein it further comprises, at each network element located upstream said first network element (C) along said working path, continuing routing said flow portion (A→D; C→A; B→A) along said working path, until said first network element (C).

**3.** The method according to claim 1 or 2, wherein said step b) comprises, in a switching matrix (SWC) included in said first network element (C):
- switching said flow portion (A→D; C→A; B→A) from an input of said switching matrix (SWC) from which said flow portion (A→D; C→A; B→A) is received from said working path to an output of said switching matrix (SWC) through which said flow portion (A→D; C→A; B→A) is transmitted along said working path in absence of said failure or degradation (F); and
- at said output, performing a loopback on said flow portion (A→D; C→A; B→A) by switching said flow portion (A→D; C→A; B→A) to a further output of said switching matrix (SWC) through which said flow portion (A→D; C→A; B→A) is transmitted along said protection path.

**4.** The method according to claim 3, wherein it further comprises, at a network element located upstream said first network element (C) along said working path, receiving said flow portion (A→D; C→A; B→A) after it has undergone said loopback, and passing through said flow portion (A→D; C→A; B→A) along said protection path, until a further network element.

**5.** The method according to claim 4, wherein it further comprises, if said further network element is other than an output network element (A) through which said flow portion (A→D; C→A; B→A) has to exit said radio communication network (RCN), rerouting the flow portion (A→D; C→A; B→A) from said protection path to said working path, until said output network element (A).

**6.** The method according to any of the preceding claims, wherein it further comprises using said protection path for transmitting a further traffic flow in said radio communication network (RCN), before said first network element (C) performs said step a).

**7.** The method according to any of the preceding claims, wherein it further comprises, before said step a), determining at a second network element (D) adjacent to said failure or degradation (F) and located downstream said failure or degradation (F) along said working path, that said failure or degradation (F) is unidirectional, and forcing said failure or degradation (F) to become bidirectional, thus allowing said first network element (C) to detect said failure or degradation (F).

**8.** A network element (C) for a radio communication network (RCN) having a topology of a ring, said radio communication network (RCN) being suitable for transmitting a flow portion (A→D; C→A; B→A) of a traffic flow (A↔D; A↔C; A↔B) through a working path along a first direction of said ring, wherein said network element (C) is configured for:
a) detecting a failure or degradation (F), said first network element (C) being adjacent to said failure or degradation (F) and located upstream said failure or degradation (F) along said working path; and
b) rerouting the flow portion (A→D; C→A; B→A) from the working path to a protection path suitable for transporting said flow portion (A→D; C→A; B→A) along a second direction of said ring opposite to said first direction,
said network element (C) being **characterized in that** it is not configured for carrying out any information exchange about said failure or degradation (F) amongst all of said plurality of network elements (A, B, C, D).

**9.** A radio communication network (RCN) having a topology of a ring and comprising a plurality of network elements (A, B, C, D), said radio communication network (RCN) being suitable for transmitting a flow portion (A→D; C→A; B→A) of a traffic flow (A↔D; A↔C; A↔B) through a working path along a first direction of said ring, wherein said plurality of network elements (A, B, C, D) comprise a first network element (C) according to claim 8.

**10.** The radio communication network (RCN) according to claim 9, wherein each network element located upstream said first network element (C) along said working path is configured for continuing routing said flow portion (A→D; C→A; B→A) along said working path, until said first network element (C).

**11.** The radio communication network (RCN) according to claim 9 or 10, wherein said first network element (C) comprises a switching matrix (SWC) configured for performing said rerouting by:
- switching said flow portion (A→D; C→A; B→A) from an input of said switching matrix (SWC) from which said flow portion (A→D; C→A; B→A) is received from said working path to an output of said switching matrix (SWC) through which said flow portion (A→D; C→A; B→A) is transmitted along said working path in absence of said failure or degradation (F); and
- at said output, performing a loopback on said flow portion (A→D; C→A; B→A) by switching said flow portion (A→D; C→A; B→A) to a further output of said switching matrix (SWC) through which said flow portion (A→D; C→A; B→A) is transmitted along said protection path.

**12.** The radio communication network (RCN) according to claim 11, wherein a network element located upstream said first network element (C) along said working path, is configured for receiving said flow portion (A→D; C→A; B→A) after it has undergone said loopback, and passing through said flow portion (A→D; C→A; B→A) along said protection path, until a further network element.

**13.** The radio communication network (RCN) according to claim 12 wherein, if said further network element is other than an output network element (A) through which said flow portion (A→D; C→A; B→A) has to exit said radio communication network (RCN), said third network element is configured for rerouting the flow portion (A→D; C→A; B→A) from said protection path to said working path, until said output network element (A).

**14.** The radio communication network (RCN) according to any of claims 9 to 13, wherein said plurality of network elements (A, B, C, D) is configured for using said protection path for transmitting a further traffic flow in said radio communication network (RCN), before said first network element (C) performs said detecting.

**15.** The radio communication network (RCN) according to any of claims 9 to 14, wherein said second network element (D) adjacent to said failure or degradation (F) and located downstream said failure or degradation (F) along said working path, is configured for determining that that said failure or degradation (F) is unidirectional, and forcing said failure or degradation (F) to become bidirectional, thus allowing said first network element (C) to detect said failure or degradation (F).

**16.** A computer program product comprising computer-executable instructions for performing the method of claim 1 when the program is run on a computer.
